# EUROPÄISCHE PATENTSCHRIFT

(11) **EP 1 796 811 B1**
(45) Veröffentlichungstag und Bekanntmachung des Hinweises auf die Patenterteilung: **13.06.2012**
(21) Anmeldenummer: 05797030.3
(22) Anmeldetag: 14.10.2005
(51) Int. Cl.: B01D 36/00, B01D 46/24, B01D 35/16, F02M 37/22

(54) **FILTER ZUR TRENNUNG VON ZWEI FLÜSSIGKEITEN ODER VON FLÜSSIGKEITSBESTANDTEILEN AUS EINEM GAS**
FILTER FOR SEPARATING TWO LIQUIDS OR LIQUID CONSTITUENTS FROM A GAS
FILTRE POUR SÉPARER DEUX LIQUIDES OU DES CONSTITUANTS DE LIQUIDE CONTENUS DANS UN GAZ

(30) Priorität: 14.10.2004 DE 102004050264
(43) Veröffentlichungstag der Anmeldung: 20.06.2007
(73) Patentinhaber: MANN + HUMMEL GMBH, 71638 Ludwigsburg (DE)
(72) Erfinder: JOKSCHAS, Günter, 71540 Murrhardt (DE); BAMMERSPERGER, Ludwig, 94419 Reisbach (DE)
(74) Vertreter: Seyboth, Matthias
(86) Internationale Anmeldenummer: PCT/EP2005/055253
(87) Internationale Veröffentlichungsnummer: WO 2006/040348

(56) Entgegenhaltungen:
- EP-A- 0 433 664
- EP-A- 0 732 133
- DE-U1- 29 915 146
- US-A- 4 619 764
- US-A- 4 626 348

## Beschreibung

Die Erfindung betrifft Filter zur Filtration von Kraftstoffen wie Benzin und Diesel für Brennkraftmaschinen.

Die heutigen Verbrennungsmotoren stellen immer höhere Anforderungen an die eingesetzten Betriebsstoffe wie Öl oder die Kraftstoffe Benzin und Diesel. Moderne Einspritzsysteme von Otto- und Dieselmotoren reagieren empfindlich auf kleinste Verunreinigungen im Kraftstoff. Schäden an den Einspritzsystemen können durch Partikelerosion sowie durch Korrosion aufgrund von Wasseranteilen im Kraftstoff entstehen. Eine Aufgabe der Kraftstofffilter kann daher neben der Partikelfiltration auch die Entfernung von Wasser aus dem Kraftstoff sein.

Insbesondere bei Dieselmotoren stellt die Korrosion durch Wasseranteile im Dieselkraftstoff ein Problem dar. Wasseranteile im Dieselkraftstoff können zwischen 200 ppm und 2 % liegen, das Wasser kann in freier Form oder stabil im Kraftstoff emulgiert vorliegen. Bei den modernen Dieselmotoren wird der Kraftstoff in der Regel direkt in die Zylinder eingespritzt. Man unterscheidet hier hauptsächlich zwischen Pumpe-Düse-Systemen, Common-Rail-Systemen und den zunehmend seltener eingesetzten Direkteinspritzungen mit magnetventilgesteuerten Verteilereinspritzpumpen. Common-Rail-Systeme und Verteilereinspritzpumpen sind aufgrund der längeren Verweilzeit des Kraftstoffs im Einspritzsystem besonders empfindlich gegenüber hohen Wasseranteilen im Kraftstoff. Pumpe-Düse-Systeme benötigen eine Wasserabscheidung nur, wenn ein hoher Wasseranfall erwartet wird.

Wassertröpfchen scheiden sich in der Regel im Kraftstofffilter an den Fasern des Filtermediums ab und vereinigen sich zu immer größeren Tropfen. Die Tropfen laufen am Faltenbalg außen und teilweise innen wegen ihrer im Vergleich zum Kraftstoff höheren Dichte ab. Das Wasser sammelt sich in einem Flüssigkeitssammelraum, einem Wassersammelraum, der in der Regel unterhalb des Filtermediums angebracht ist. Aus dem Wassersammelraum kann das Wasser dann z.B. durch ein Ventil entnommen werden, ohne den gesamten Filter wechseln zu müssen.

Für die Ausgestaltung des Filters und die Ausbildung eines Flüssigkeitssammelraums unterhalb eines Filterelementes in einem Filter gibt es verschiedene Realisierungen.

Das US-Patent US 5 904 844 beschreibt einen Kraftstofffilter mit einem zweiteiligen Gehäuse. Im ersten Teil des Gehäuses befindet sich das Filtermedium. Das Filtermedium liegt im unteren Bereich des ersten Teils des Gehäuses zumindest partiell auf. Am unteren Ende des ersten Teils des Gehäuses ist ein zweiter Teil angeschraubt, der den Wassersammelraum bildet.

Nachteilig an der Bauform des Filters des '844 Patents ist, dass der Filterkorpus nicht einteilig gefertigt werden kann. Gewinde oder Verbindungseinrichtungen und Abdichtungen zwischen dem ersten Teil des Gehäuses mit dem Filtermedium und dem zweiten Teil des Gehäuses mit dem Wassersammelraum sind nötig.

Aus der deutschen Patentanmeldung DE 100 29 539 ist z.B. ein Filter mit einem ringförmig ausgebildeten Filtermedium bekannt. Das Filtermedium ist im oberen Bereich des Gehäuses angeordnet, während im unteren Bereich ein Abstandshalter für das Filterelement vorgesehen ist. Der Abstandshalter ist mit einem Federelement ausgestattet. Der Abstandshalter sorgt dafür, dass ein Sammelraum für abgeschiedenes Wasser gebildet werden kann. Das Gehäuse, in dem sich das Filtermedium und der Abstandshalter befinden, kann aus einem Stück gefertigt und mit einem Deckel verschlossen sein. Die europaïsche Patentanmeldung EP-A-0433664 offenbart ein Kraftstofffiter gemäß dem Oberbegriff des Anspruchs 1.

Eine Aufgabe der Erfindung ist es, einen weiterentwickelten Filter bereitzustellen. Eine weitere Aufgabe der Erfindung ist es, einen kostengünstig zu produzierenden Filter bereitzustellen.

Eine weitere Aufgabe der Erfindung ist es, einen Filter bereitzustellen, der eine einfache Befestigungsmöglichkeit für einen Flüssigkeitsablass vorsieht.

Diese und weitere Aufgaben werden durch einen Filter gemäß Anspruch 1 gelöst. Der Filter umfasst ein Gehäuse zur Aufnahme eines Filtermediums und ein Filtermedium. Im unteren Bereich des Filters ist eine Ablassöffnung zur Entnahme von Flüssigkeiten aus dem Filter angebracht. Ein Abstandshalter dient zur Bildung eines Sammelraums für Flüssigkeiten. Der Abstandshalter definiert einen Flüssigkeitssammelraum. Der Abstandshalter ist mit Stegen, die zu einem Auge führen, ausgebildet und das Auge weist Flüssigkeitskanäle auf. Durch die Flüssigkeitskanäle können Flüssigkeiten den Bereich unterhalb des Auges erreichen, auch wenn das Auge auf dem Boden des Gehäuses aufliegt. Dadurch wird ein Ablassen von Flüssigkeiten unterhalb des Auges ermöglicht. Durch das Einsetzen des beschriebenen Abstandshalters kann ein einteiliges Gehäuse verwendet werden, das kostengünstig herstellbar ist.

Der Abstandshalter ist als Stützring ausgebildet. Der Abstandshalter kann dann passgenau in das Gehäuse des Filters eingebracht werden, und ein Verrutschen des Abstandshalters wird erschwert.

Der Abstandshalter umfasst eine Befestigung für Der einen Flüssigkeitsablass. Flüssigkeitsablass wird im Auge des Abstandshalters als Ablassschraube oder als Ablassventil eingeschraubt. Die Verwendung des Abstandshalters zur Befestigung einer Vorrichtung zum Flüssigkeitsablass vereinfacht die Produktion des Filters.

Diese und weitere Merkmale von bevorzugten Weiterbildungen der Erfindung gehen außer aus den Ansprüchen auch aus der Beschreibung und der Zeichnung hervor.

Es zeigen:
- Fig. 1: einen erfindungsgemäßen Filter mit Abstandshalter und
- Fig. 2: einen Abstandshalter aus Fig. 1.

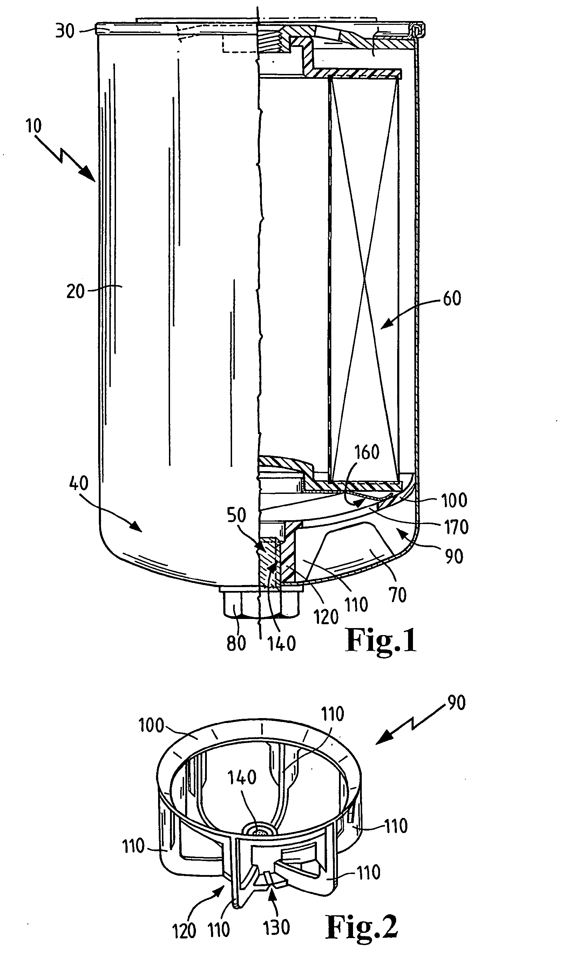

Fig. 1 zeigte eine mögliche Ausführungsform des erfindungsgemäßen Filters 10. Der dargestellte Filter 10 kann z.B. zur Filtration von Dieselkraftstoff verwendet werden und ermöglicht das Abscheiden von Wasser aus dem Dieselkraftstoff. Der Filter 10 ist zum Anschrauben an einen Träger konzipiert. In dem Träger ist sowohl eine Zuleitung als auch eine Ableitung für den Kraftstoff vorgesehen. Das Gehäuse 20 des Filters ist einteilig angefertigt und mit einem Deckel 30 versehen. Das Gehäuse 20 ist topfförmig ausgebildet. Im unteren Bereich 40 des Filters 10 befindet sich eine Öffnung 50. Innerhalb des Filters 10 befindet sich ein Filtermedium 60, insbesondere ein sternförmig gefaltetes Filtervlies oder Filterpapier. Im unteren Bereich des topfförmigen Gehäuses 20 ist ein Sammelraum 70 für abzuscheidendes Wasser vorgesehen. Der Sammelraum 70 ist mit einer Ablassschraube 80 verschlossen. Innerhalb des Sammelraumes 70 befindet sich als Abstandhalter 90 ein kronenförmig ausgestaltetes Kunststoffteil, welches einen Abstützrand 100 für das Filtermedium 60 aufweist sowie Stege 110, die eine gewisse axiale Höhe aufweisen, um den Sammelraum 70 für das Wasser zu definieren. Diese Stege 110 sind zentrisch gemeinsam über ein Auge 120 verbunden. Das Auge 120 weist Ablaufkanäle 130 auf sowie ein Gewinde 140 für die Ablassschraube 80. Die Ablaufkanäle 130 können als Bohrungen im Bereich des Auges 10 ausgeführt sein. Erfindungsgemäß sind die Ablaufkanäle 130 rinnenartig als Vertiefungen im Material des Abstandshalters 90 ausgeführt. Die Ablassschraube 80 ist durch eine Bohrung im Gehäuse 20 des Filters 10 hindurch in den Abstandshalter 90 eingeschraubt. Zum Ablassen von Wasser, das vom Dieselkraftstoff abgetrennt wurde, kann die Schraube 80 geöffnet werden.

Der Filter 10 aus Fig. 1 kann entsprechend auch als Gas-, insbesondere als Luftfilter zum Abscheiden von Flüssigbestandteilen verwendet werden. Ein solcher Luftfilter könnte z.B. Anwendung in einer Kurbelgehäuseentlüftung finden.

Fig. 2 zeigt eine Detailansicht des Abstandshalters 90 wie er in Fig. 1 im Filter 10 verwendet wird. Von einem Stützring 150 aus, auf dem das Filtermedium 60 aufliegen kann, laufen Stege 110 im Auge 120 zusammen. Das Auge 120 hat ein Innengewinde 140, mit dem ein Wasserablass befestigt werden kann. Beim Auge 120 sind die rinnenförmigen Vertiefungen zu erkennen, die als Ablaufkanäle 130 für Wasser dienen können. Vorzugsweise ist der Abstandshalter 90 aus Kunststoff gefertigt. Die Form des Abstandshalters 90 ermöglicht ein leichtes Einsetzen in das Gehäuse 20 des Filters 10. Durch die Form des Abstandshalters 90 kann ein Verrutschen im Gehäuse 20 weitgehend vermieden werden.

## Patentansprüche

1. Kraftstofffilter (10) für Dieselmotoren oder Ottomotoren, umfassend
i.) ein Gehäuse (20) zur Aufnahme eines Filtermediums (60);
ii.) das Filtermedium (60);
iii.) eine Ablassöffnung (50) zur Entnahme von Flüssigkeiten aus dem Filter (10), wobei die Ablassöffnung (50) am unteren Bereich des Filters (10) angebracht ist;
iv.) einen Abstandshalter (90) zur Bildung eines Sammelraums (70) für Flüssigkeiten, umfassend einen Stützring (150) zur Auflage des Filtermediums (60), wobei der Abstandshalter (90) im Bereich des Sammelraums (70) mit Stegen (110), die zu einem auf dem Boden des Gehäuses aufliegenden Auge (120) führen, ausgebildet ist, wobei in das Auge (120) eine Ablassschraube oder ein Ablassventil einschraubbar ist,
v.) **dadurch gekennzeichnet, dass** das Auge (120) Flüssigkeitskanäle (130) aufweist, die als rinnenartige Vertiefungen im Material des Abstandshalters (90) ausgeführt sind, wodurch ein Flüssigkeitsablass unterhalb des Auges ermöglicht wird.

2. Filter (10) nach einem der vorangegangenen Ansprüche, wobei das Gehäuse (20) einteilig ausgebildet ist.

3. Filter (10) nach einem der vorangegangenen Ansprüche, wobei das Filtermedium (60) ein sternförmig gefaltetes Filtermittel umfasst.

4. Filter (10) nach einem der vorangegangenen Ansprüche, wobei das Filtermedium (60) ein Filtervlies oder ein Filterpapier umfasst.

5. Filter (10) nach einem der vorangegangenen Ansprüche, wobei der Abstandshalter (90) aus Kunststoff gefertigt ist.

6. Filter (10) nach einem der vorangegangenen Ansprüche, wobei der Abstandshalter (90) kronenförmig ausgebildet ist.

7. Filter (10) nach einem der vorangegangenen Ansprüche, wobei der Abstandshalter (90) Zentrierungen für das Filtermedium (60) umfasst.

## Claims

1. Fuel filter (10) for Diesel engines or Otto engines, comprising
i.) a housing (20) for receiving a filter medium (60);
ii.) the filter medium (60);
iii.) a discharge opening (50) for discharging liquids from the filter (10), wherein the discharge opening (50) is attached at the lower area of the filter (10);
iv.) a spacer (90) for forming a collecting chamber (70) for liquids, comprising a supporting ring (150) for supporting the filter medium (60), wherein the spacer (90) is designed in the area of the collecting chamber (70) with bars (110) which lead to an eyelet (120) placed on the bottom of the housing, wherein a discharge screw or a discharge valve can be screwed into the eyelet (120).
v.) **characterized in that** the eyelet (120) features liquid channels (130) which are designed as groove-like recesses in the material of the spacer (90) which allows a liquid discharge underneath the eyelet.

2. Filter (10) according to one of the above claims, wherein the housing (20) is designed as one piece.

3. Filter (10) according to one of the above claims, wherein the filter medium (60) comprises a star-shaped pleated filter medium.

4. Filter (10) according to one of the above claims, wherein the filter medium (60) comprises a filter fleece or a filter paper.

5. Filter (10) according to one of the above claims, wherein the spacer (90) is made of synthetic material.

6. Filter (10) according to one of the above claims, wherein the spacer (90) has a crown-shaped design.

7. Filter (10) according to one of the above claims, wherein the spacer (90) comprises centering elements for the filter medium (60).

## Revendications

1. Filtre à carburant (10) pour moteurs diesel ou moteurs à essence, comprenant
i.) un boîtier (20) permettant de réceptionner un milieu filtrant (60);
ii.) le milieu filtrant (60);
iii.) un orifice d'évacuation (50) pour le prélèvement de liquides du filtre (10), l'orifice d'évacuation (50) étant placée dans la partie inférieure du filtre (10);
iv.) une entretoise (90) destinée à former un compartiment collecteur (70) pour des liquides, comprenant une bague d'appui (150) servant d'appui au milieu filtrant (60), l'entretoise (90) étant dotée, dans la zone de l'espace collecteur (70), de nervures (110) qui mènent à un oeillet (120) posé sur le fond du boîtier, un bouchon fileté de décharge ou une soupape de décharge pouvant être vissé(e) dans l'oeillet (120),
v.) **caractérisé en ce que** l'oeillet (120) fait preuve de canaux à liquides (130) qui sont réalisés comme des creux similaires à des goulottes dans le matériau de l'entretoise (90), ce qui autorise l'écoulement de liquides en dessous de l'oeillet.

2. Filtre (10) selon l'une des revendications précédentes, le boîtier (20) étant constitué en un seul bloc.

3. Filtre (10) selon l'une des revendications précédentes, le milieu filtrant (60) comprenant un moyen filtrant plié en forme d'étoile.

4. Filtre (10) selon l'une des revendications précédentes, le milieu filtrant (60) comprenant un non-tissé filtrant ou un papier filtre.

5. Filtre (10) selon l'une des revendications précédentes, l'entretoise (90) étant fabriquée en matière plastique.

6. Filtre (10) selon l'une des revendications précédentes, l'entretoise (90) étant réalisée en forme de couronne.

7. Filtre (10) selon l'une des revendications précédentes, l'entretoise (90) comprenant des éléments de centrage pour le milieu filtrant (60).
